# EUROPEAN PATENT APPLICATION

(11) **EP 3 309 328 A1**
(43) Date of publication of application: **18.04.2018**
(21) Application number: 16194117.4
(22) Date of filing: 17.10.2016
(51) Int. Cl.: E04H 15/54, B60J 11/00, B63B 17/02, E04G 21/28

(54) **A PROTECTIVE COVERING, IN PARTICULAR A TARPAULIN**

(71) Applicant: Bang, Song-Hyuk, Seoul 1450-1 (KR); Bang, Won Kyu, Seoul (KR)
(72) Inventor: Bang, Song-Hyuk, Seoul 1450-1 (KR); Bang, Won Kyu, Seoul (KR)
(74) Representative: Berggren Oy, Helsinki & Oulu

(57) **Abstract**

The invention relates to a protective covering (10) comprising reinforced edge areas (11), a rope channel (16) at the outermost edge of the protective covering (10), a reinforcement rope (15) located in the rope channel (16) and fastening openings (20, 25) located at the reinforced edge areas (11). The fastening openings (20, 25) of the protective covering (10) are located at the reinforced edge areas (11) of the protective covering (10) at minimum distance (D) from the reinforcement rope (15) of the protective covering (10) and the protective covering (10) is 100% recyclable plastic, advantageously polyolefin, material.

## Description

The invention concerns in general the technology of protective coverings such as protecting coverings for objects needing protection from weather, dirt, dust etc. In particular the invention concerns a protective covering according to the preamble part of claim 1.

Protective coverings, in particular tarpaulins are used to protect the objects needing protection from weather: rain, snow, sun, mist or dirt or dust. The protective coverings can be built to a tent-like or a shelter-type covering for example in storage purposes or attached to structures of trailers etc. for example in transportation purposes or attached onto boats for protection against weather.

One special usage of tarpaulin type protective covers is weather and fall down protection is in construction sites i.e. as scaffolds for safety and to ensure that for example a renovation of an outer surface or a roof of a building can be done under any weather conditions.

In order to fasten the protective coverings according to prior art the protective coverings have been provided with eyelets, or fastening openings reinforced with metallic rings surrounding the fastening openings located at intervals on edge areas of the protective coverings. Fastening means for fastening the protective covering to its place to cover the desired object or for fastening the protective covering to the scaffolds are to be connected to these openings. The fastening openings reinforced by the metallic ring are typically precut, ready to use openings or sometime the metallic rings surrounding the openings to be punched open in time of fastening. The type of fastening means depends on the type of use of the protective covering. In simplest examples the fastening means can be a rope to be threaded through the openings, pins etc. The fastening means can also be a special fastening element designed for a special purpose. Typically the edge areas of the protective coverings are reinforced at edge areas by at least two fold layer of the covering material, which layers are welded together to form a uniform layer with a non-welded rope channel at the outermost edges. The edge areas may also comprise a reinforcement band welded as one layer of the uniform edge area layer. The rope channel is typically formed at the outer most edge of the protective covering and the rope located in the rope channel further reinforces the protective covering and especially its edges.

At present times especially due to environmental reasons there is increasing need for designing products to be recyclable and this concern also the protective coverings. The metallic eyelet rings are not recyclable and thus create a problem in recycling of the protective coverings, which otherwise are made of recyclable material.

During use of protective coverings the metallic eyelet rings may also detach from the covering or crush and thus fastening of the protective covering for the following need of protection of an object might be unsecure, difficult or even impossible.

In production of the protective coverings the attachment of the metallic rings to the covering material around the punched opening also increases the production costs as more work steps with certain accuracy is needed.

An objective of the present invention is to create a protective covering, in which the disadvantages and problems relating to protective coverings known from prior art are eliminated or at least minimized.

An objective of the present invention is to create a protective covering, in which the disadvantages and problems relating to relating to the metallic eyelet rings are eliminated or at least minimized.

A further object of the present invention is to provide a protective covering, which is substantially 100 % recyclable.

The above objects and those that will be apparent later are achieved by the protective covering, which is characterized by the features of the characterizing part of claim 1. Advantageous embodiments and features are defined in the dependent claims.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated.

This protective covering achieves the main objective of the invention a securely fastenable, of substantially 100% recyclable material made protective covering, which has durable fastening openings without any metallic reinforcement parts or other metallic parts.

According to an advantageous feature of the invention the fastening openings of the protective covering are located at the reinforced edge areas of the protective covering at minimum distance from the reinforcement rope of the protective covering. The fastening openings i.e. eyelets or openings are located in immediate vicinity of the reinforcement rope at the edge area of the protective covering. The fastening openings are thus located at and next to the inner side of the reinforcement rope such that the reinforcement rope is at the outermost edge area of the protective covering.

According to an advantageous feature of the invention the fastening opening is substantially a circular aperture i.e. full-moon shape.

According to an advantageous feature of the invention the fastening opening is a semicircular aperture i.e. half-moon shape and located the substantially straight part of the aperture next to and extending parallel to the edge of the protective covering.

According to an advantageous feature the fastening opening is a semi-circular aperture i.e. half-moon shape and located the substantially straight part of the opening next to and extending parallel to the reinforcement rope of the protective covering. Advantageously a full-moon shaped opening is cut to the protective covering and the protective covering is folded in the middle of the opening such that a half-moon shaped opening is formed. Thus at the substantially straight part of the opening only the reinforcement rope extends.

According to an advantageous feature of the invention the fastening opening located at a corner of the protective covering is a circular aperture.

According to an advantageous feature of the invention diameter of the circular fastening opening is 1 - 30 mm.

According to an advantageous feature of the invention radius of the semi-circular fastening opening is 0,5 - 15 mm.

According to an advantageous feature of the invention the protective covering is made of substantially 100 % recyclable material.

According to an advantageous feature of the invention the protective covering woven fabric and made of polyethylene or polypropylene.

According to an advantageous feature of the invention the reinforcement rope of the protective covering is made of polyethylene or polypropylene.

According to an advantageous feature of the invention the protective covering and the reinforcement rope are of same material.

According to an advantageous feature of the invention the minimum distance of the fastening openings from the reinforcement rope is 0 - 15 mm.

The protective covering according to the invention and its advantageous aspects provide for many advantages: a protective covering made substantially 100 % recyclable is achieved as no metallic reinforcement parts or rings are needed in order to reinforce the openings. The reinforcing rope located in the channel outermost edges of the protective covering is also made of recyclable material. Also the production of the protective coverings is simplified and economic as the work process is simplified since the work steps for attaching the metallic reinforcement rings are no longer needed.

In the following the invention is described in more detail with reference to the accompanying drawing, in which
Fig. 1 illustrates schematically a general overview of an example of the protective covering,
Fig. 2 illustrates schematically in more detail the eyelet of the protective covering at the fastening region in the embodiment of figure 1,
Fig. 3 illustrates a general overview of another example of the protective covering,
Fig. 4 illustrates schematically in more detail the eyelet of the protective covering at the fastening region in the embodiment of figure 3,
Fig. 5 illustrates a general overview of another example of the protective covering and
Fig. 6 illustrates schematically in more detail the eyelet of the protective covering at the fastening region in the embodiment of figure 5.

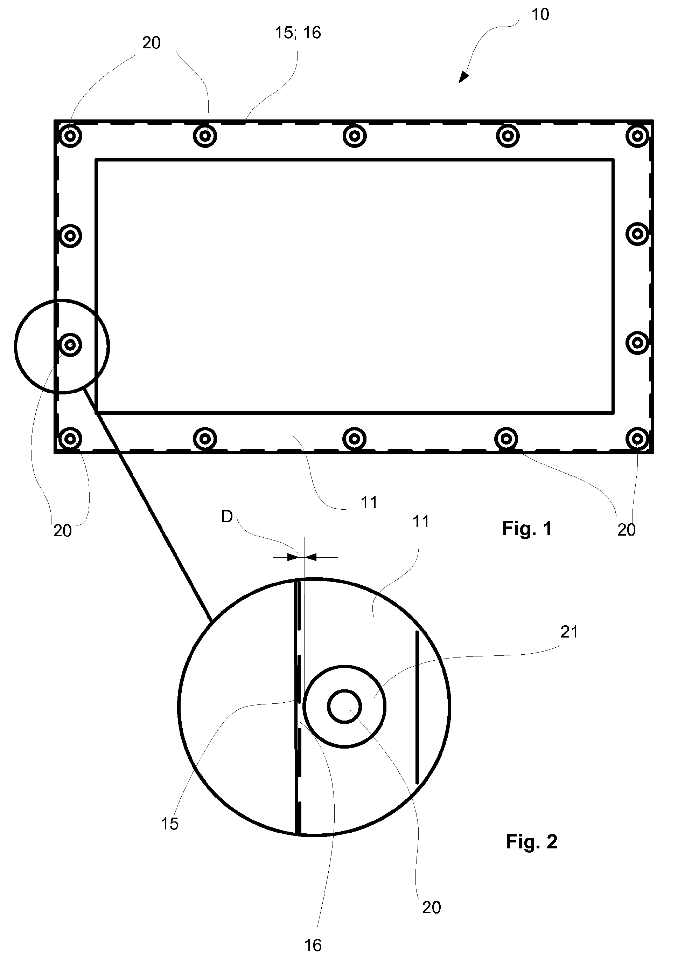

During the course of the following description of figures 1 - 6 like numbers and signs will be used to identify like elements according to the different views which illustrate the invention. Some repetitive reference signs may have been omitted from the figures for the sake of clarity.

According to the example shown in figures 1 - 2 the protective covering 10 to be laid over or to form a covering for objects needing protection for weather, dirt, dust etc. and comprises with eyelets i.e. fastening openings 20 located spaced apart at desired distances from each other at edge areas 11 of the protective coverings. The protective coverings are made of polyethylene or polypropylene as a woven fabric. The edge areas 11 are reinforced by at least two fold layer of the covering material, which layers are typically welded together to form a uniform layer with a non-welded rope channel 16 at the outermost edges. The edge areas 11 may also comprise a reinforcement band welded as one layer of the uniform edge area layer. In the rope channel 16 extending along the outermost edges of the protective covering 10 is located a rope 15, which further reinforces the protective covering 10 and especially its edges. The rope 15 is made of the same material as the covering, typically of polyethylene or polypropylene. The fastening openings 20 of the protective covering are located at the reinforced edge areas 11 of the protective covering 10 at minimum distance D from the reinforcement rope 15 of the protective covering 10 in immediate vicinity or the reinforcement rope 15. In this example the fastening openings 20 are substantially circular apertures and the diameter of each circular fastening opening is 1 - 30 mm and the minimum distance D of the fastening openings 20 from the reinforcement rope is 0 -15 mm. The distance D is measured as distance between the closest edge of the fastening opening and the closest edge of the rope. The protective covering 10 is made of substantially 100 % recyclable material and the reinforcement rope 15 is of the same material.

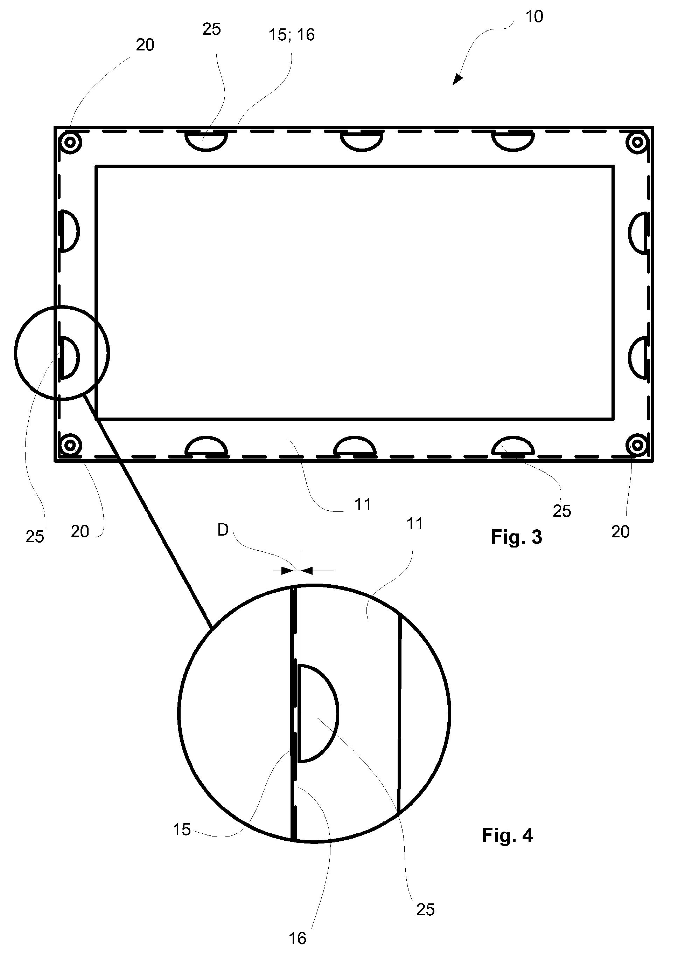

According to the example shown in figures 3 - 4 the protective covering 10 to be laid over or to form a cover objects needing protection for weather, dirt, dust etc. comprises with eyelets i.e. fastening openings 20, 25 located spaced apart at desired distances from each other at edge areas 11 of the protective coverings. The protective coverings are made of polyethylene or polypropylene as a woven fabric. The edge areas 11 are reinforced by at least two fold layer of the covering material, which layers are welded together to form a uniform layer with a non-welded rope channel 16 at the outermost edges. The edge areas 11 may also comprise a reinforcement band welded as one layer of the uniform edge area layer. In the rope channel 16 extending along the outermost edges of the protective covering 10 is located a rope 15, which further reinforces the protective covering 10 and especially its edges. The rope 15 is made of the same material as the covering, typically of polyethylene or polypropylene. The fastening openings 20, 25 of the protective covering are located at the reinforced edge areas 11 of the protective covering 10 at minimum distance D from the reinforcement rope 15 of the protective covering 10. In this example the fastening openings 25 in rows along the edges of the protective covering 10 are substantially semicircular openings i.e. half-moon shaped openings and located the substantially straight part of the opening next to and extending parallel to the edge of the protective covering 10 and the radius of the semi-circular fastening opening 25 being 0,5 - 15 mm. Advantageously the fastening openings 20 located at a corner of the protective covering are circular i.e. full-moon shaped with diameter of 2 - 28 mm. In this example the minimum distance D of the fastening openings 25 from the reinforcement rope is 0 - 15 mm. The distance D is measured as distance between the closest edge of the fastening opening and the closest edge of the rope. The protective covering 10 is made of substantially 100 % recyclable material. Also the reinforcement rope 15 of the protective covering 10 is made of same material with the protective covering 10.

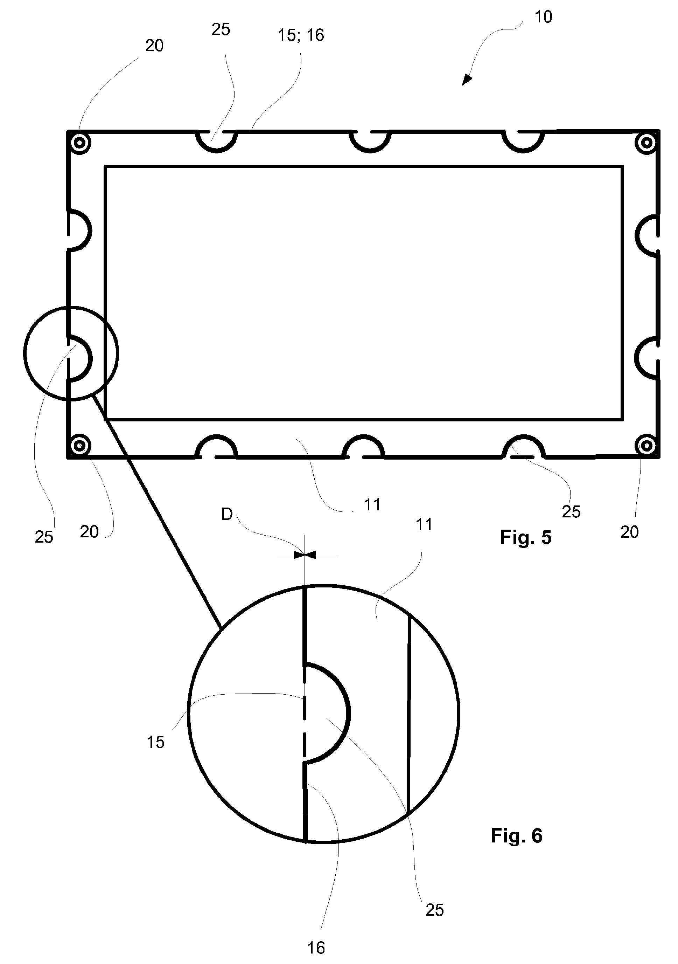

According to the example shown in figures 5 - 6 the protective covering 10 to be laid over or to form a cover objects needing protection for weather, dirt, dust etc. comprises with eyelets i.e. fastening openings 20, 25 located spaced apart at desired distances from each other at edge areas 11 of the protective coverings. The protective coverings are made of polyethylene or polypropylene as a woven fabric. The edge areas 11 are reinforced by at least two fold layer of the covering material, which layers are welded together to form a uniform layer with a non-welded rope channel 16 at the outermost edges. In this example a full-moon shaped opening 20 is cut to the protective covering and the protective covering is folded in the middle of the opening such that a half-moon shaped opening 25 is formed. Thus at the substantially straight part of the opening 25 only the reinforcement rope 15 extends and the rope channel 16 is missing at this point. In the rope channel 16 extending along the outermost edges of the protective covering 10 is located a rope 15, which further reinforces the protective covering 10 and especially its edges. The rope 15 is made of the same material as the covering, typically of polyethylene or polypropylene. The fastening openings 20, 25 of the protective covering are located at the reinforced edge areas 11 of the protective covering 10 at minimum distance D from the reinforcement rope 15 of the protective covering 10. In this example the fastening openings 25 in rows along the edges of the protective covering 10 are substantially semicircular openings i.e. half-moon shaped openings and located the substantially straight part of the opening next to and extending parallel to the edge of the protective covering 10 and the radius of the semi-circular fastening opening 25 being 0,5 - 15 mm. Advantageously the fastening openings 20 located at a corner of the protective covering are circular i.e. full-moon shaped with diameter of 2 - 28 mm. In this example the minimum distance D of the fastening openings 25 from the reinforcement rope is 0 mm i.e. there is no protective covering material between the reinforcement rope 15 and the fastening openings and thus the fastening rope 15 runs through the fastening openings 25. The protective covering 10 is made of substantially 100 % recyclable material. Also the reinforcement rope 15 of the protective covering 10 is made of same material with the protective covering 10.

Variations and modifications to the embodiments described above are possible without departing from the scope of the amended claims.

### REFERENCE SIGNS USED IN FIGURES

- 10: protective covering
- 11: reinforced edge area
- 15: rope
- 16: channel
- 20, 25: fastening opening
- D: distance

## Claims

1. A protective covering (10) comprising reinforced edge areas (11), a rope channel (16) at the outermost edge of the protective covering (10), a reinforcement rope (15) located in the rope channel (16) and fastening openings (20, 25) located at the reinforced edge areas (11), **characterized in that** the fastening openings (20, 25) of the protective covering (10) are located at the reinforced edge areas (11) of the protective covering (10) at minimum distance (D) from the reinforcement rope (15) of the protective covering (10) and that the protective covering (10) is 100% recyclable plastic, advantageously poly-olefin, material.

2. The protective covering (10) according to claim 1, **characterized in that** the protective covering (10) and the reinforcement rope (15) are made of same material, advantageously of polyethylene or polypropylene.

3. The protective covering (10) according to claim 1 or 2, **characterized in that** the protective covering (10) comprises no metallic material.

4. The protective covering (10) according to any of claims 1 - 3, **characterized in that** the fastening openings (20) are substantially circular.

5. The protective covering (10) according to any of claims 1 - 3, **characterized in that** at least part of the fastening openings (25) are a semicircular and located the substantially straight part of the opening next to and extending substantially parallel to the edge of the protective covering (10).

6. The protective covering (10) according to any of claims 1 - 3, **characterized in that** full-moon shaped opening (20) is cut to the protective covering and the protective covering is folded in the middle of the opening such that a half-moon shaped opening (25) is formed.

7. The protective covering (10) according to claim 5 or 6, **characterized in that** the fastening openings (20) located at corners of the protective covering (10) are circular.

8. The protective covering (10) according to claim 4 or 7, **characterized in that** diameter of the circular fastening (20) opening is 1 - 30 mm.

9. The protective covering (10) according to claim 5 or 6, **characterized in that** radius of the semi-circular fastening opening (25) is 0,5 - 15 mm.

10. The protective covering (10) according to any of previous claims, **characterized in that** the minimum distance (D) of the fastening openings (25) from the reinforcement rope is 0 - 15 mm.
